## Europäisches Patentamt
## European Patent Office
## Office européen des brevets

(11) Veröffentlichungsnummer: **0 208 070**
**B1**

(12) # EUROPÄISCHE PATENTSCHRIFT

(45) Veröffentlichungstag der Patentschrift:
**04.07.90**

(51) Int. Cl.⁵: **C04B 18/02**, C04B 18/08, C04B 38/08, C04B 28/18

(21) Anmeldenummer: **86105457.5**

(22) Anmeldetag: **19.04.86**

(54) Verfahren zum Herstellen von Bauelementen aus Verbrennungsrückständen.

(30) Priorität: **11.07.85 DE 3524693**

(43) Veröffentlichungstag der Anmeldung:
**14.01.87 Patentblatt 87/3**

(45) Bekanntmachung des Hinweises auf die Patenterteilung:
**04.07.90 Patentblatt 90/27**

(84) Benannte Vertragsstaaten:
**BE NL**

(56) Entgegenhaltungen:
EP-A- 0 069 095
WO-A-82/00819
DE-A- 1 671 241
US-A- 3 192 060
US-A- 4 336 069

(73) Patentinhaber: **Rheinisch-Westfälische Kalkwerke AG, D-5600 Wuppertal 11 - Dornap(DE)**

(72) Erfinder: **Clementi, Franz, Dr., Emharistrasse 11, D-8080 Emmering(DE)**
Erfinder: **Fischedick, Günter, Württembergstrasse 11, D-4030 Ratingen 6(DE)**
Erfinder: **Frank, Günter, Dr., Wiedener Strasse 70, D-5600 Wuppertal 11(DE)**
Erfinder: **Kortum, Udo, In den Eschen 31, D-5603 Wülfrath(DE)**
Erfinder: **Mackrodt, Adolf, Am Schlagbaum 30, D-4030 Ratingen 6(DE)**

(74) Vertreter: **Becker, Thomas, Dr., Dipl.-Ing., Eisenhüttenstrasse 2, D-4030 Ratingen 1(DE)**

## Beschreibung

Die Erfindung betrifft ein zweistufiges Verfahren zum Herstellen von wärmedämmenden Bauelementen aus Verbrennungsrückständen, insbesondere Flugasche aus der Steinkohlen- und/oder Braunkohlenverbrennung, wobei die Verbrennungsrückstände mit CaO-haltigen Bindemitteln und mit Wasser gemischt werden.

Verbrennungsrückstände, auch Aschen genannt, bestehen im wesentlichen aus mineralischen Bestandteilen und Unverbranntem. Je nach der Art der Abscheidung unterscheidet man zwischen Flugaschen, die vom Rauchgasstrom mitgeführt und aus dem Rauchgasstrom abgeschieden werden, und Grobaschen, die meist ohne besondere Vorrichtung durch Schwerkraft abgeschieden werden. Zur Verbrennung werden im wesentlichen Staubfeuerungen, unterschieden nach Trockenfeuerungen und Schmelzfeuerungen, Rostfeuerungen und Wirbelschichtfeuerungen, eingesetzt. Je nach der Art des eingesetzten Brennstoffs unterscheidet man weiterhin zwischen Steinkohlen-, Braunkohlen- und Müllverbrennungsaschen.

Die Verwendung von Kohle als Brennstoff für die Stromerzeugung bzw. für industrielle Zwecke hat in den letzten Jahren stark zugenommen und wird auch weiterhin zunehmen, so daß auch die Menge der Verbrennungsrückstände ansteigt. Die Verbrennungsrückstände aus der Steinkohlenverbrennung werden derzeit in großem Umfang im Straßen-, Wege- und Dammbau, bei der Herstellung von Formsteinen, als Strahlmittel und als Zusatzmittel bei der Zement- und Betonherstellung verwendet. Ein erheblicher Anteil von Verbrennungsrückständen aus Steinkohlenfeuerungen, insbesondere Steinkohlenflugasche, kann trotzdem nicht verwendet und muß deponiert werden. Verbrennungsrückstände aus Braunkohlenfeuerungen, aus Wirbelschichtfeuerungen und von Müllverbrennungsanlagen werden derzeit – wenn auch nach dem Stand der Technik vorgeschlagen – nicht wieder verwertet.

Aus dem Stand der Technik sind eine Vielzahl von Verfahren zur Herstellung von Bauelementen und zur Herstellung von Zuschlagstoffen für Baustoffe/Bauelemente unter Verwendung von Verbrennungsrückständen bekannt.

Im einzelnen ist aus der DE-AS 1 696 409 ein Verfahren zur Herstellung eines Bausteines, insbesondere eines Hohlblock- oder Vollsteines aus Braunkohlenfilterasche, Sand und Zement sowie Wasser in einem bestimmten Mischungsverhältnis unter Dampfhärtung bekannt, nach dem Bausteine mit einer hohen Festigkeit von bis zu 320 kg/cm² hergestellt werden können. Die nach diesem Verfahren hergestellten Bausteine weisen insbesondere entsprechend dem angewandten hohen Preßdruck eine hohe Rohdichte und demzufolge eine hohe Wärmeleitfähigkeit auf.

Bei einem weiteren bekannten Verfahren (vgl. DE-AS 1 671 241) zum Herstellen von Leichtbaustoffen aus Flugasche, Kalk oder Zement, Aluminiumpulver und Wasser, wird die Flugasche- und Kalk- bzw. Zementkomponente des Gemisches durch Bims ersetzt. Dieses Verfahren hat sich in der Praxis nicht durchsetzen können, da die daraus hergestellten Produkte nicht zuletzt aufgrund der Qualitätsschwankungen der Verbrennungsrückstände minderer Qualität und damit nicht verkäuflich sind.

Aus weiteren Literaturstellen, z.B. der DE-OS 3 242 992, sind Verfahren zur Herstellung von Leichtzuschlagstoffen bekannt, wobei Verbrennungsrückstände gemeinsam mit Bindemitteln und Zusätzen durch Pelletisieren und Granulieren zu Leichtzuschlagstoffen geformt und bei Temperaturen von bis zu 100°C erhärtet werden. Diese Zuschlagstoffe entsprechen jedoch hinsichtlich ihrer Festigkeit, Rohdichte, Kornverteilung und Schüttgewicht nicht den Zuschlagstoffen, wie sie zur Herstellung von wärmedämmenden Steinen notwendig sind.

Bekannt ist weiterhin, s. DE-OS 2 639 655, die Anwendung der Dampfhärtung sowie von rotierenden Autoklaven (DE-AS 1 571 330) bei der Herstellung von Zuschlagstoffen für die Herstellung von Bauelementen unter Verwendung von Flugasche.

Bekannt ist auch (DE-OS 3 325 775) ein Verfahren zur Herstellung eines Zuschlagstoffes für Beton aus Flugstaub, wobei der Flugstaub mit Zement gemischt, mit Wasser angemacht und unter Verwendung einer Brikettierpresse für Steinkohlenbriketts mit hohem Druck Formlinge geformt und diese anschließend ausgehärtet werden.

Schließlich zeigt die EP-A 69 095 ein Verfahren zur Herstellung von dampfgehärteten anorganischen Isoliermaterialien auf der Basis Portlandzement, Kalk, Aluminiumpulver, Gips und Wasser, wobei ein durch Dampfhärtung hergestellter und mit einem Hydrophobierungsmittel behandelter Luftporenbeton mit einem Bindemittel auf Basis Portlandzement oder Kalk, Aluminiumpulver, Gips, Sand und Wasser gemischt und geformt wird. Der Bindemittelanteil liegt dabei zwischen 15 und 50 Gew.-%.

Ausgehend von dem vorstehend erläuterten Stand der Technik liegt der Erfindung die Aufgabe zugrunde, ein Verfahren der eingangs genannten Art anzugeben, mittels dessen die Nachteile der bekannten Verfahren vermieden werden und raumbeständige, gegen Wasser und Frost beständige Bauelemente mit hoher Wärmedämmung in wirtschaftlicher Weise herstellbar sind.

Diese Aufgabe wird nach der Erfindung dadurch gelöst, daß in einer ersten Verfahrensstufe 96 bis 80 Gew.-% Verbrennungsrückstände mit 4 bis 20 Gew.-% CaO-haltigem Bindemittel und Wasser sowie einem gas- oder schaumerzeugenden Mittel gemischt, die Mischung geformt und in einem Autoklaven ausgehärtet wird und daß in einer zweiten Verfahrensstufe der aus dem Autoklaven entnommene Rohblock zu Splitt zerkleinert und mit 3 bis 10 Gew.-% CaO-haltigem Bindemittel gemischt, bei erhöhter Temperatur gelagert, in Formen gepreßt imd gehärtet wird, wobei die Autoklavbehandlung bei 8 bis 16 bar für

2

2 bis 20 Stunden erfolgt. In bevorzugter Weise wird dem aus Verbrennungsrückständen, CaO-haltigem Bindemittel und Wasser bestehenden Ausgangsgemisch Aluminiumpulver als gas- oder schaumerzeugendes Mittel zugesetzt und die zu einem Rohblock aufgeschäumte Masse vor der Härtung entformt. Bei einer weiteren Verfahrensvariante wird mit Vorteil das Ausgangsgemisch als Suspension in einer Form gehärtet und der entstandene Rohblock anschließend entformt.

Bevorzugterweise wird ferner der in der ersten Verfahrensstufe ausgehärtete Rohblock zu Splitt mit einer Korngröße von im wesentlichen weniger als 7 mm zerkleinert. Diese Mischung wird mit Vorteil mit einer Preßfeuchte von 15 bis 30% in die endgültige Form gepreßt. Um die zu verwendenden Verbrennungsrückstände weitgehend zu nutzen, soll das freie CaO aus den Verbrennungsrückständen bevorzugt als CaO-Bindemittel verwendet werden.

Die Vorteile des Verfahrens sind insbesondere darin zu sehen, daß unter Verwendung von Verbrennungsrückständen, insbesondere für Flugasche aus der Steinkohlen- und/oder Braunkohlenverbrennung, sowie solchen aus Wirbelschichtfeuerungen und Müllverbrennungsanlagen raumbeständige, gegen Wasser und Frost beständige Bauelemente mit einer niedrigen Wärmeleitzahl, vorzugsweise einer solchen, die unterhalb von 0,25 W/mK liegt, herstellbar sind; die Wärmeleitzahl liegt damit unterhalb derjenigen von normal hergestellten Glasbetonsteinen. Die nach dem erfindungsgemäßen Verfahren hergestellten Bauelemente/Bausteine weisen dabei eine Trockenrohdichte von 500 bis 800 kg/m³ auf und liegen in den Festigkeitsklassen 2, 4 und 6 entsprechend 2,5 5 und 7,5 N/mm², während die Scherbenrohdichte der Bauelemente zwischen 0,4 und 1,4 kg/l liegt.

Ein weiterer wichtiger Vorteil des Verfahrens ist darin zu sehen, daß der in der ersten Verfahrensstufe hergestellte Splitt aus Verbrennungsrückständen in den Wintermonaten herstellbar ist und auch in gebrochener Form oder auch in Blockform im Freien gelagert werden kann und dann entsprechend der Nachfrage zu dem gewünschten Baustoff weiterverarbeitet werden kann.

Wichtig und von Vorteil ist ferner bei der Durchführung des Verfahrens, daß die Formgebung zu Bausteinen auf in der Kalksandsteinindustrie üblichen Pressen vorgenommen werden kann und man sich auch der vorhandenen Formwerkzeuge weitgehend bedienen kann.

Schließlich ist ein weiterer Vorteil des Verfahrens darin zu sehen, daß Verbrennungsrückstände mit hohem Anteil an Unverbranntem verwendet werden können.

Von besonderer Bedeutung ist die Verwendung von Verbrennungsrückständen, insbesondere von Flugasche aus der Steinkohlen- und/oder Braunkohlenverbrennung.

Das Verfahren ist im folgenden anhand von bevorzugten Ausführungsbeispielen näher erläutert, wobei alle Prozentangaben in Gewichtsprozent erfolgen.

Beispiel A

20% Weißfeinkalk wurden mit 80% Steinkohlenflugasche trocken gemischt, anschließend mit Wasser entsprechend einem Wasser/Feststoff-Faktor, d.h. einem Verhältnis von Wasser zu Feststoff von 0,4 und Aluminiumpulver auf eine Rohdichte von ca. 700 kg/m³ aufgeschäumt. Der aufgeschäumte Rohblock wurde bei 16 bar 4,5 Stunden dampfgehärtet. Nach der Dampfhärtung hatte der Block eine Trockenrohdichte von 650 kg/m³ und eine Druckfestigkeit von 2,7 N/mm².

Der Rohblock wurde in einem Brecher zu Flugaschesplitt mit folgender Siebanalyse gebrochen:

|            | %    | %     |
|------------|------|-------|
| 7–5 mm     | 4,5  | 100,0 |
| 5–3 mm     | 13,3 | 95,5  |
| 3–2 mm     | 5,4  | 82,2  |
| 2–1 mm     | 14,4 | 76,8  |
| 1–0,6 mm   | 9,5  | 62,4  |
| 0,6–0,2 mm | 22,6 | 52,9  |
| 0,2–0,1 mm | 10,2 | 30,3  |
| 0,1–0,06 mm| 10,6 | 20,1  |
| 0,06 mm    | 9,5  | 9,5   |

Die Feuchtigkeit des Flugaschensplitts betrug ca. 31% und das Schüttgewicht wurde zu 670 g/l bestimmt.

In einem zweiten Verfahrensschritt wurde der Flugaschesplitt mit 8% Weißfeinkalk (bezogen auf Trockensubstanz) gemischt, ca. 2 Stunden im Reaktor bei ca. 80°C gelagert mit einer Preßfeuchte von ca. 27% in einer Kalksandsteinpresse in die endgültige Form gepreßt und anschließend bei 16 bar 4,5 Std. dampfgehärtet.

Mit steigendem Preßdruck ergaben sich in den so hergestellten Bauelementen folgende Daten:

| Scherbenrohdichte kg/m³ | Druckfestigkeit N/mm² |
|---|---|
| 870 | 3,5 |
| 960 | 8,4 |
| 1030 | 13,2 |

Beispiel B

10% Weißfeinkalk wurden mit 90% Steinkohlenflugasche trocken gemischt, anschließend mit Wasser entsprechend einem Wasser/Feststoff-Faktor von 0,4 und Aluminiumpulver auf eine Rohdichte von ca. 450 kg/m³ in einer Form aufgeschäumt. Der aufgeschäumte Rohblock wurde bei 16 bar 4,5 Std. dampfgehärtet. Nach der Dampfhärtung hatte der Block eine Trockenrohdichte von 420 kg/m³ und eine Druckfestigkeit von 0,8 N/mm². Der Rohblock wurde in einem Brecher zu Flugaschesplitt mit folgender Siebanalyse gebrochen:

| | % | % |
|---|---|---|
| 7–5 mm | 0,5 | 100,0 |
| 5–3 mm | 5,5 | 99,5 |
| 3–2 mm | 3,7 | 94,0 |
| 2–1 mm | 12,8 | 90,3 |
| 1–0,6 mm | 9,8 | 77,5 |
| 0,6–0,2 mm | 31,2 | 67,7 |
| 0,2–0,1 mm | 14,2 | 36,5 |
| 0,1–0,06 mm | 15,6 | 22,3 |
| –0,06 mm | 6,7 | 6,7 |

Die Feuchtigkeit des Flugaschesplitts betrug 31% und das Schüttgewicht wurde zu 632 g/l bestimmt.

Der Flugaschesplitt wurde mit 8% Weißfeinkalk (bezogen auf Trockensubstanz) gemischt, ca. 2 Stunden im Reaktor bei 80° gelagert, mit einer Preßfeuchte von ca. 22% in einer Kalksandsteinpresse in die endgültige Form gepreßt und anschließend bei 16 bar 4,5 Std. dampfgehärtet.

Mit steigendem Preßdruck ergaben sich in den so hergestellten Bauelementen folgende Daten:

| Scherbenrohdichte kg/m³ | Druckfestigkeit N/mm² |
|---|---|
| 900 | 3,7 |
| 1060 | 9,8 |
| 1260 | 19,5 |

Die Wärmeleitzahl der fertigen Steine lag bei den in den Beispielen A und B hergestellten Steinen zwischen 0,18 und 0,24 W/mK.

Beispiel C

90% Steinkohlenflugasche wurden mit 10% Weißfeinkalk gemischt und mit Wasser entsprechend einem Wasser/Feststoff-Faktor von 0,68 zu einer Suspension 10 Minuten gemischt. Die Suspension wurde in Formen 2,5 Std. bei 16 bar dampfgehärtet. Das gehärtete Rohmaterial hatte eine Trockenrohdichte von 950 kg/m³ und eine Druckfestigkeit von 5,0 N/mm². Es wurde anschließend in einem Brecher zu Flugaschesplitt mit einer Korngröße von weniger als 4 mm gebrochen.

In dem zweiten Verfahrensschritt wurde dieser Flugaschesplitt mit 8% Weißfeinkalk und 20% Wasser gemischt, 2 Std. bei 80°C im Autoklav vorgelagert und anschließend mit einer Preßfeuchte von ca. 20% in einer Kalksandsteinpresse in die endgültige Form zu Steinen verpreßt, die 4,5 Std. bei 16 bar dampfgehärtet wurden.

Die fertigen Steine hatten eine Scherbenrohdichte von 1030 kg/m³ und eine Druckfestigkeit von 15,6 N/mm². Die Wärmeleitzahl wurde zu 0,21 W/mK ermittelt.

**Patentansprüche**

1. Zweistufiges Verfahren zum Herstellen von wärmedämmenden Bauelementen mit einer Trockenrohdichte von 500 bis 800 kg/m³ aus Verbrennungsrückständen, insbesondere Flugasche, wobei in der ersten Verfahrensstufe 96 bis 80 Gew.-% der Verbrennungsrückstände mit 4 bis 20 Gew.-% CaO-haltigem Bindemittel und Wasser sowie einem gas- oder schaumerzeugenden Mittel gemischt, die Mischung geformt und in einem Autoklaven ausgehärtet und in einer zweiten Verfahrensstufe der aus dem Autoklaven entnommene Rohblock zu Splitt zerkleinert und mit 3 bis 10 Gew.-% CaO-haltigem Bindemittel sowie Wasser gemischt, bei erhöhter Temperatur gelagert, in Formen gepreßt und in einem Autoklaven gehärtet und die Autoklavbehandlung bei jeweils 0,8 bis 1,6 MPa (8 bis 16 bar) für 2 bis 20 Stunden durchgeführt wird.

2. Verfahren nach Anspruch 1, bei dem die zu einem Rohblock in der ersten Verfahrensstufe aufgeschäumte Masse vor der Härtung entformt wird.

3. Verfahren nach Anspruch 1 oder 2, bei dem als gas- oder schaumbildendes Mittel Aluminiumpulver beigemischt wird.

4. Verfahren nach einem der Ansprüche 1 bis 3, bei dem das Ausgangsgemisch als Suspension in einer Form gehärtet und der entstandene Rohblock anschließend entformt wird.

5. Verfahren nach einem der Ansprüche 1 bis 4, bei dem der ausgehärtete Rohblock zu Splitt mit einer Korngröße von im wesentlichen weniger als 7 mm zerkleinert wird.

6. Verfahren nach einem der Ansprüche 1 bis 5, bei dem die Mischung aus Splitt und CaO-haltigem Bindemittel mit einer Preßfeuchte von 15 bis 30 Gew.-% in die endgültige Form gepreßt wird.

7. Verfahren nach einem der Ansprüche 1 bis 6, bei dem das freie CaO aus den Verbrennungsrückständen als CaO-haltiges Bindemittel verwendet wird.

8. Verfahren nach einem der Ansprüche 1 bis 6, bei dem als CaO-haltiges Bindemittel Weißfeinkalk verwendet wird.

9. Verfahren nach einem der Ansprüche 1 bis 8, bei dem die Mischung der ersten Verfahrensstufe unter Einstellung eines Wasser/Feststoff-Faktors von 0,4 bis 0,68 hergestellt wird.

## Claims

1. Two step process for manufacturing isolated workpieces having a dry bulk density of between 500 and 800 $kg/m^3$ from combustion residues, preferably fly ash, whereby during the first step 96 to 80% by weight of said combustion residues are mixed with 4 to 20% by weight of a CaO containing binder, water and an agent producing gas or foam, the mixture being then formed and hardened in an autoclave while during the second step the ingot taken off the autoclave is crushed to chips and mixed with 3 to 10% by weight of a CaO containing binder and water, then stored at increased temperature, pressed in moulds and hardened in an autoclave, the treatment in said autoclave being carried out under 0,8 to 1,6 MPa (8 to 16 bar) for 2 to 20 hours.

2. Process according to claim 1 in which the mass being foamed in said first step by forming said ingot is demoulded before hardening.

3. Process according to claim 1 or 2, in which an aluminium powder is added as a gas or foam producing agent.

4. Process according to one of claims 1 to 3, in which the basic mixture is hardened in a mould as a suspension and the foamed ingot is demoulded afterwards.

5. Process according to one of claims 1 to 4, in which the hardened ingot is crashed to chips having a size of at least less than 7 mm.

6. Process according to one of claims 1 to 5, in which the mixture of chips and CaO containing binder is pressed into its final design having a humidity of 15 to 30% by weight.

7. Process according to one of claims 1 to 6, in which said free CaO of said combustion residues is used as said CaO containing binder.

8. Process according to one of claims 1 to 6, in which powdered white chalk is used as said CaO containing binder.

9. Process according to one of claims 1 to 8, in which said mixture of said first step is produced having a water/solid ratio of between 0,4 and 0,68.

## Revendications

1. Procédé en deux phases pour la fabrication de matériaux de construction isolants avec une masse volumique apparente de 500 à 800 $kg/m^3$ à base de résidus de combustion, particulièrement d'escarbilles dans laquelle 96 à 80% en poids des résidus sont mélangés à 4 à 20% en poids d'un liant contenant du CaO, de l'eau et d'un agent producteur de gaz ou de mousse, le mélange est façonné et durci dans l'autoclave pendant la première phase et dans laquelle pendant une deuxième phase le bloc brut sorti d'autoclave est concassé en gravillons et mélangé à 3 à 10% en poids d'un liant contenant du CaO et d'eau, pressé dans des moules et durci dans un autoclave ou la procédure dans l'autoclave est menée sous une pression de 0,8 à 1,6 MPa (8 à 16 bar) pendant une période de 2 à 20 heures.

2. Procédé selon la revendication 1, dans laquelle la masse, qui a été moussée à un bloc brut pendant la première phase va démouler avant le durcissement.

3. Procédé selon la revendication 1 ou 2, dans laquelle un poudre d'aluminium est ajouté comme agent producteur de gaz ou de mousse.

4. Procédé selon l'une des revendications 1 à 3, dans laquelle le mélange initial est durci dans un moule à l'état de suspension et le bloc brut qui en résulte est ensuite démoulé.

5. Procédé selon l'une des revendications 1 à 4, dans laquelle le bloc brut solidifié est concassé en gravillons d'un calibre essentiellement inférieur à 7 mm.

6. Procédé selon l'une des revendications 1 à 5, dans laquelle le mélange, constitué de gravillons et de liant contenant du CaO, est compressé afin d'acquérier sa forme définitive, avec une humidité de moulage de 15 à 30% en poids.

7. Procédé selon l'une des revendications 1 à 6, dans laquelle le CaO libre provenant des résidus de combustion est utilisé comme liant au CaO.

8. Procédé selon l'une des revendications 1 à 6, dans laquelle une chaux blanche pulvérisée est utilisé comme liant au CaO.

9. Procédé selon l'une des revendications 1 à 8, dans laquelle le mélange de la première phase est préparé avec un rapport eau/matière solide de 0,4 à 0,68.